# EUROPÄISCHE PATENTANMELDUNG

(11) **EP 1 128 600 A1**
(43) Veröffentlichungstag der Anmeldung: **29.08.2001**
(21) Anmeldenummer: 00103798.5
(22) Anmeldetag: 23.02.2000
(51) Int. Cl.: H04L 12/24, H04L 29/06, H04Q 11/04

(54) **Verfahren zum Erstellen eines Kommunikationsablaufs zwischen mindestens zwei Instanzen und Protokolltester hierfür**

(71) Anmelder: Tektronix, Inc., Beaverton, OR 97077-0001 (US)
(72) Erfinder: Erhardt, Jörg, 12109 Berlin (DE); Kittan, Jens, 16737 Schwante (DE); Borgert, Wolfgang, 10961 Berlin (DE)
(74) Vertreter: Schurack, Eduard F.

(57) **Zusammenfassung**

Das vorliegende Verfahren ist gekennzeichnet durch folgende, am Protokolltester ausführbare Schritte: a) Auswählen der an der Kommunikation beteiligten Instanzen; b) Auswählen einer Protokollschicht, auf deren Grundlage die Kommunikation zwischen den ausgewählten Instanzen ablaufen soll; c) Auswählen derjenigen abstrakten Kommunikationsschnittstellen der Protokollschicht, die an der Kommunikation beteiligt sind; d) Auswählen der Kommunikationsdaten; e) automatisches Erstellen eines zwischen den mindestens zwei Instanzen ausführbaren Kommunikationsablaufs durch den Protokolltester, auf der Grundlage des Auswahlen in den Schritten a) bis d), wobei die Auswahl von Schritt c) und/oder Schritt d) graphisch erfolgt und den dabei auswählbaren Parametern Beschreibungsdateien zugeordnet sind, die in Schritt e) zur Erstellung eines zwischen den Instanzen ausführbaren Kommunikationsablaufs verwendet werden. Die Erfindung betrifft weiterhin einen Protokolltester, in dem das erfindungsgemäße Verfahren realisiert ist.

## Beschreibung

Die vorliegende Erfindung betrifft ein Verfahren zum Erstellen eines Ablaufs einer zwischen mindestens zwei Instanzen ablaufenden Kommunikation, wobei eine Instanz ein Protokolltester ist. Sie betrifft überdies einen Protokolltester, in dem dieses Verfahren realisiert ist.

Im Bereich des Protokolltests ist es nötig, den Kommunikationsablauf, durch den ein Test beschrieben wird, eindeutig zu spezifizieren, so daß dieser Ablauf automatisch maschinell ausgeführt werden kann. Sprachen, wie zum Beispiel TTCN (Tree and Tabular Combined Notation) ermöglichen dies, sind aber komplex und für einen ungeübten Leser schwer zu verstehen. TTCN hat sich im Bereich des Conformance Testing durchgesetzt, da diese Tests sehr umfangreich sind und TTCN solche umfangreichen Tests gut unterstützt. Daneben gibt es diverse proprietäre Testbeschreibungssprachen. Um die Verständlichkeit zu erleichtern, wird zu Dokumentations- und Beschreibungszwecken einfacher Abläufe die standardisierte Sprache MSC (Message Sequence Charts) verwendet. Detailliertere Angaben zu MSC können der ITU-T Z.120 entnommen werden, die durch diese Bezugnahme in den Offenbarungsgehalt der vorliegenden Anmeldung aufgenommen wird. Bei MSC handelt es sich um genormte Ablaufdiagramme, auch Pfeildiagramme oder X-Diagramme genannt. Sie sind unabhängig von Programmierkenntnissen zu verstehen. Eine automatische Ausführung von mit MSC beschriebenen Kommunikationen ist auf Protokolltestern jedoch nicht möglich. Um ausführbare Tests zu erhalten müssen daher sogenannte Scripts geschrieben werden, was eine Einarbeitung des Anwenders in die jeweilige Programmiersprache erforderlich macht. Eine allgemein verständliche Dokumentation muß zusätzlich erstellt werden. Für einen Test müssen daher getrennt zum einen eine graphische und textuelle Dokumentation erstellt werden, zum anderen ein Source-Code oder ein ausführbarer Binary.

Aus diesem Stand der Technik ergeben sich eine Vielzahl von Nachteilen: Häufig ist eine Konvertierung bestehender Tests nötig, so daß die Gefahr von Inkonsistenzen besteht. Konfigurationsinformationen sind oft in den Spezifikationen der Testkommunikationen nicht oder zumindest nicht maschinenlesbar oder nicht menschenlesbar enthalten. Die verwendeten Sprachen stellen häufig proprietäre Ansätze dar, die von Gerät zu Gerät verschieden sind und neu erlernt werden müssen. Der Anwender wird nicht oder nur rudimentär bei der Erstellung der Nachrichten und Ereignisse mit Protokollwissen unterstützt.

Der vorliegenden Erfindung liegt daher die Aufgabe zugrunde, die Nachteile der oben dargestellten, aus dem Stand der Technik bekannten Vorgehensweise zu überwinden.

Diese Aufgabe wird gelöst durch ein Verfahren gemäß Anspruch 1.

Gemäß einem weiteren Aspekt der Erfindung wird ein Protokolltester zur Verfügung gestellt mit den Merkmalen von Anspruch 8.

Die Erfindung erlaubt es, den gewünschten Kommunikationsablauf in einer leicht verständlichen graphischen, standardisierten Form, beispielsweise MSC, zu erstellen. Durch die erfindungsgemäße Lösung ist es nunmehr möglich, die Kommunikationsschnittstellen und/oder die Kommunikationsdaten graphisch zu spezifizieren. Mit MSC selbst allein ist dies nicht möglich. Dadurch daß den graphisch auswählbaren Parametern Beschreibungsdateien zugeordnet sind, wird die Möglichkeit bereitgestellt, daß der Protokolltester automatisch die vom Benutzer ausgewählten Parameter in eine ausführbare Version eines Kommunikationsablaufs transformiert. Durch die graphische Bereitstellung von Parameterzusammenstellungen, aus denen der Benutzer auswählen kann, wird der Benutzer in jeder Phase mit konfigurationsspezifischer und protokollspezifischer Information unterstützt. Neben einer kurzen Einweisung in einen Graphikstandard, beispielsweise MSC, benötigt der Benutzer kein weiteres Vorwissen, um das erfindungsgemäße Verfahren erfolgreich anwenden zu können. Die graphische Darstellung erfolgt auf einer Anzeigeeinheit, beispielsweise einem Monitor oder einem Bildschirm.

Dokumentation und Implementierung wird auf diese Weise in einem Vorgang erledigt, wobei der Benutzer immer die Dokumentationssicht auf einer graphischen Benutzeroberfläche sieht.

Die Bedienungsfreundlichkeit für den Benutzer steigt umso mehr, je mehr Auswahlen dem Benutzer graphisch zur Verfügung gestellt werden. In einer besonders bevorzugten Ausführungsform der Erfindung sind daher, mit Bezug auf das erfindungsgemäße Verfahren, alle Auswahlschritte gemäß a) bis d) graphisch unterstützt, wobei allen, mit den Auswahlmitteln auswählbaren Parametern Beschreibungsdateien zugeordnet sind, die dann in Schritt e) zur Erstellung eines zwischen den Instanzen ausführbaren Kommunikationsablaufs verwendbar sind.

Die abstrakten Kommunikationsschnittstellen umfassen vorzugsweise sogenannte Service Access Points (SAPs), die Kommunikationsdaten vorzugsweise sogenannte Protocol Data Units (PDUs) und/ oder sogenannte Abstract Service Primitives (ASPs). Hierbei handelt es sich um Primitive, d. h. Datenpakete, mit denen sich verschiedene Kommunikationsschichten derselben Instanz untereinander verständigen. Ein SAP ist demnach ein Punkt, an dem verschiedene ASPs ausgetauscht werden können. Vorzugsweise enthalten ASPs PDUs, wobei üblicherweise jede PDU einzeln zu erstellen ist.

Die Auswahl der Kommunikationsdaten kann zwei Teilschritte umfassen, zunächst das graphische Auswählen eines Datenformats, dann den graphischen Aufbau einer Kommunikationsabfolge zwischen den beteiligten Instanzen.

Hinsichtlich des zuletzt genannten Teilschritts kann die Möglichkeit vorgesehen werden, Source-Code einzugeben.

Die zuvor erwähnten Merkmale der Erfindung gelten in entsprechender Weise für einen erfindungsgemäßen Protokolltester.

Weitere vorteilhafte Weiterbildungen der Erfindung sind in den Unteransprüchen definiert.

Ein Ausführungsbeispiel wird im folgenden, unter Hinweis auf die beigefügten Zeichnungen, näher beschrieben. Es stellen dar:
- Figur 1: eine erste graphische Benutzeroberfläche, wie sie bei dem erfindungsgemäßen Verfahren Anwendung findet;
- Figur 2: eine zweite graphische Benutzeroberfläche, wie sie bei dem erfindungsgemäßen Verfahren Anwendung findet;
- Figur 3: die Benutzeroberfläche von Figur 2 in einem anderen Darstellungsmodus;
- Figur 4: die Benutzeroberfläche von Figur 2 in einem weiteren Darstellungsmodus;
- Figur 5: eine dritte graphische Benutzeroberfläche, wie sie bei dem erfindungsgemäßen Verfahren Anwendung findet;
- Figur 6: die Benutzeroberfläche von Figur 5 in einem anderen Darstellungsmodus; und
- Figur 7: die Benutzeroberfläche von Figur 5 in einem weiteren Darstellungsmodus.

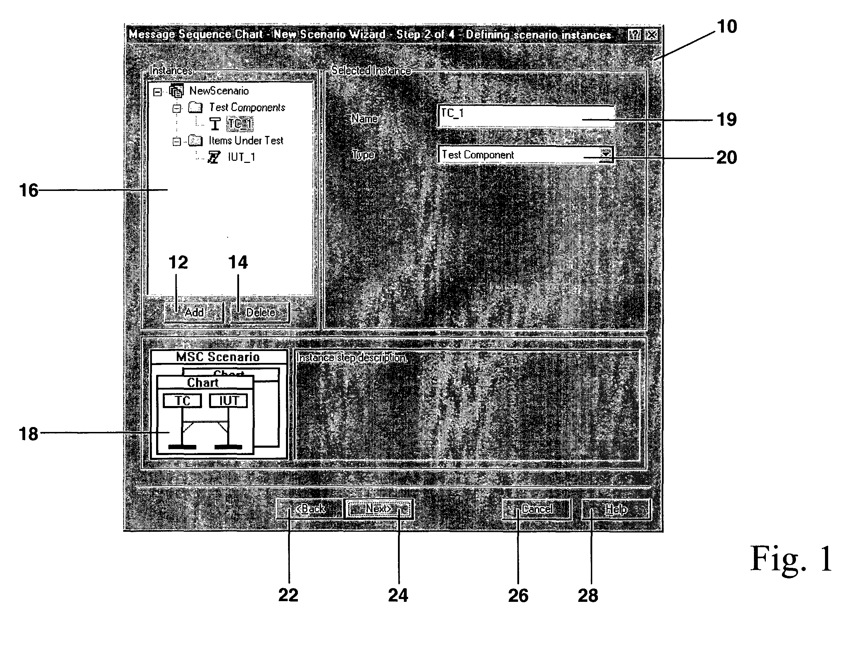

Figur 1 zeigt eine graphische Benutzeroberfläche 10, die in einem ersten Schritt auf graphischem Wege die Auswahl der an einer Kommunikation beteiligten Instanzen ermöglicht. Graphisches Auswählen im Zusammenhang mit der vorliegenden Erfindung bedeutet, daß ein Symbol oder ein Textvorschlag graphisch auf einer graphischen Benutzeroberfläche, beispielsweise einem PC-Bildschirm, angezeigt wird und durch schlichtes Aktivieren, d. h. beispielsweise durch Anklicken mit einer Maus, ausgewählt werden kann. Eine der Instanzen ist ein Protokolltester, auf dem das erfindungsgemäße Verfahren zur Verfügung gestellt wird, wobei der Protokolltester im vorliegenden Fall eine Komponente TC_1 emuliert. Mit den beiden Icons "Add" 12 und "Delete" 14 kann der Benutzer weitere Instanzen hinzufügen beziehungsweise aufgelistete Instanzen löschen. In einem Feld 16 ist die Zusammenstellung der Instanzen aufgelistet, während sie in einem Feld 18 als Diagramm angezeigt wird. In einem Feld 19 kann der Name der Instanz, in Feld 20 der Typ der Instanz festgelegt werden. Zwei Icons 22, 24 ermöglichen dem Benutzer, sich von einer Stufe der Definition des Kommunikationsablaufs zur nächsten zu bewegen, sowohl in Richtung auf detailliertere Spezifikation sowie auch in Richtung übergeordneter Darstellung. Eine "Cancel"-Taste 26 ermöglicht das Verlassen einer Stufe, wobei die vorgenommenen Änderungen rückgängig gemacht werden. Eine "Help"-Taste 28 bietet dem Benutzer weitere Unterstützung an.

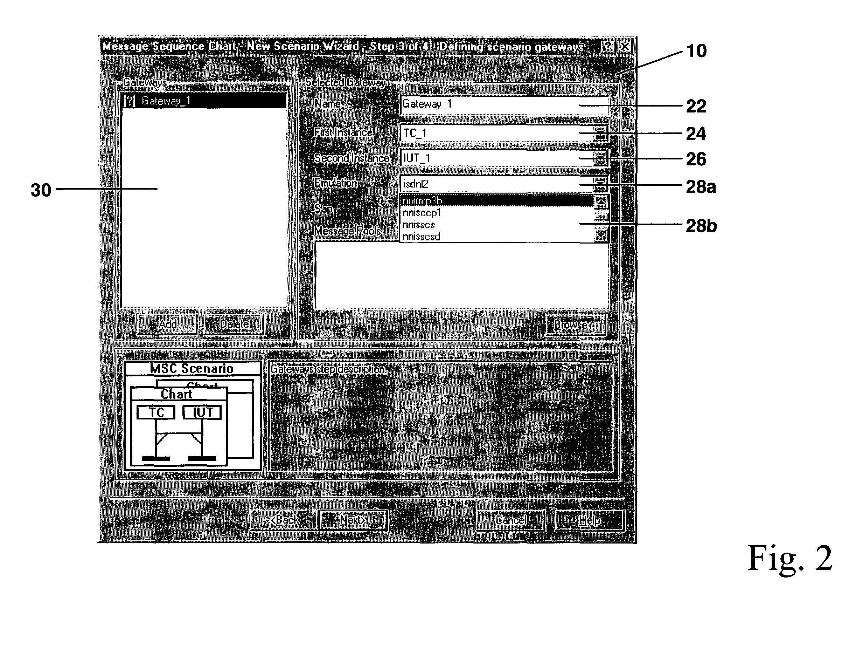

Gemäß Figur 2, in der eine weitere Darstellung der Benutzeroberfläche 10 gezeigt ist, hat der vorliegende Kommunikationsablauf den Namen Gateway_1, siehe Feld 22. An ihm nimmt teil eine erste Instanz TC_1, gemäß Feld 24, sowie eine zweite Instanz IUT_1, gemäß Feld 26. Das emulierte Protokoll ist gemäß Feld 28a vom Typ isdnl2, wobei in Feld 28b weitere, zur Auswahl stehende Protokolle angeboten werden. In einem Feld 30 können verschiedene, zur weiteren Bearbeitung auswählbare Kommunikationsabläufe angeboten werden. Die mit Bezug auf Figur 1 beschriebenen Icons 12, 14, 22, 24, 26, 28 finden sich in vergleichbarer Form mit vergleichbarer Funktion wieder, siehe auch die noch folgenden Benutzeroberflächen, und werden daher nicht nochmals beschrieben.

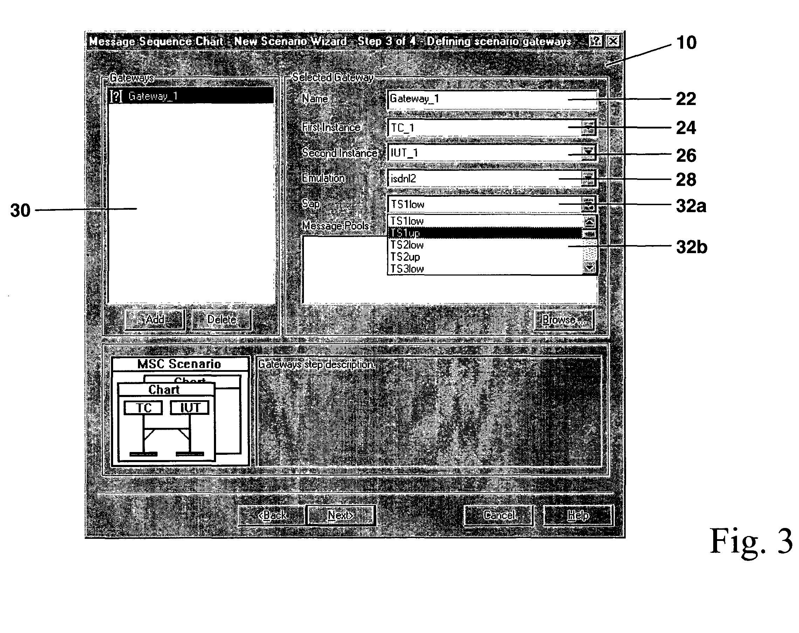

Figur 3 zeigt die Benutzeroberfläche 10 von Figur 1 in einem anderen Darstellungsmodus, und zwar zur Auswahl eines SAPs, siehe Feld 32a. Im Feld 32b werden weitere SAPs zur Auswahl angeboten. Alle in Feld 32b dargestellten SAPs werden zu der gewählten Emulation isdnl2 angeboten.

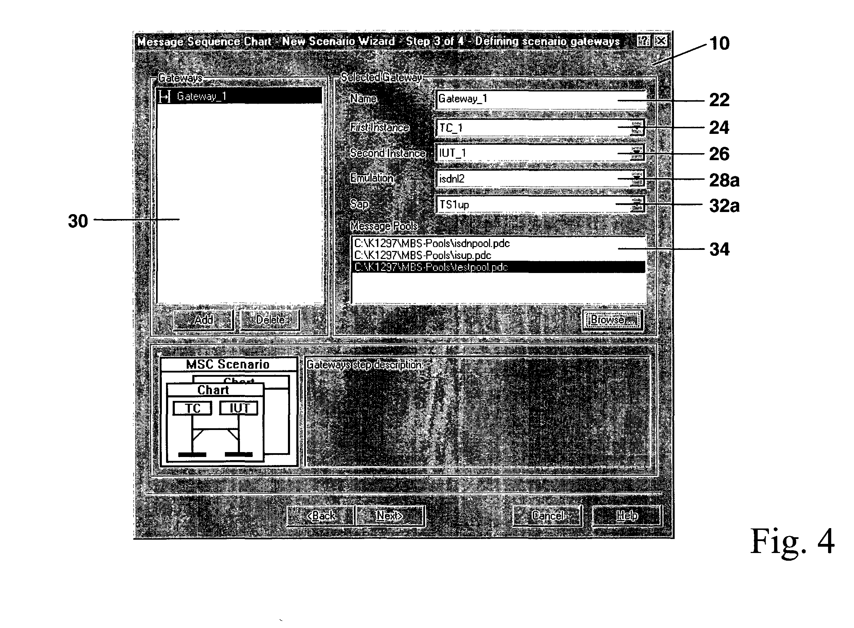

Figur 4 zeigt eine weitere Darstellungsform der Benutzeroberfläche 10 von Figur 2, wobei nunmehr in einem Feld 34 aus sogenannten Message Pools ein Format für die Kommunikationsdaten (ASPs, PDUs) verwendet wird.

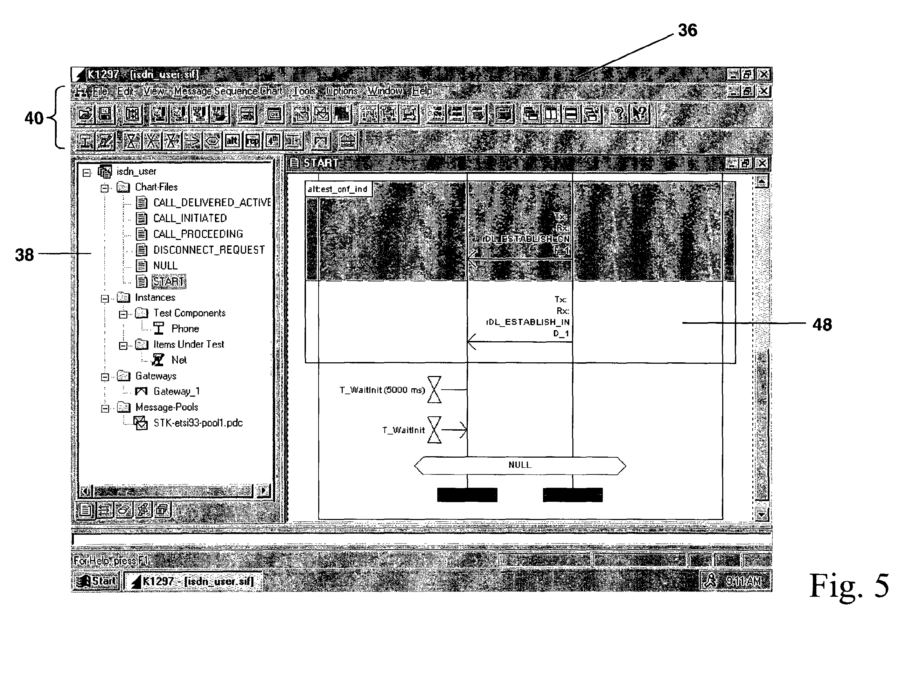

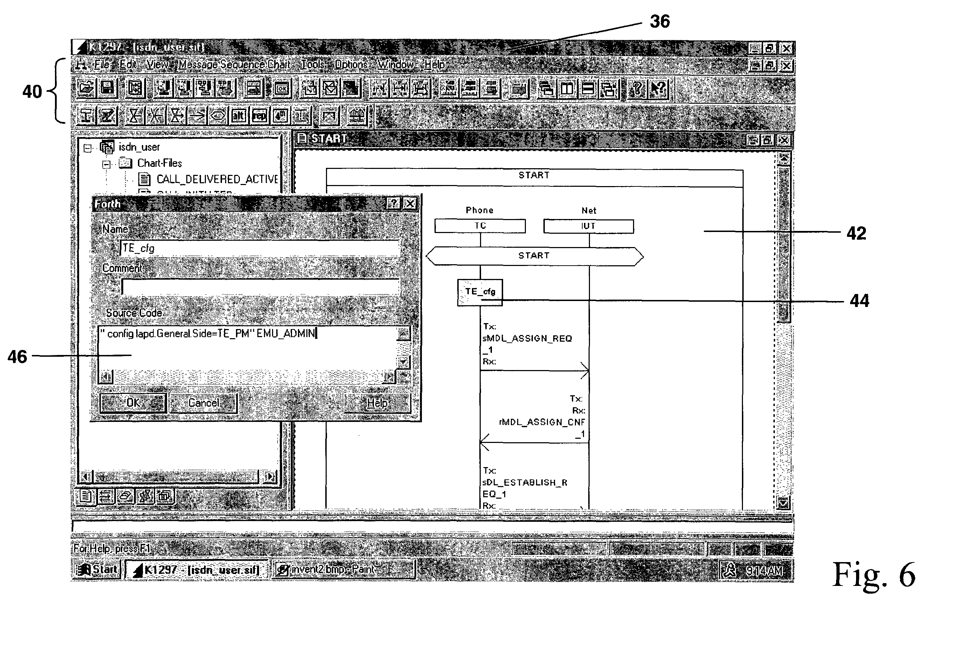

Figur 5 zeigt eine weitere Benutzeroberfläche 36, die in einem Feld 38 dem Benutzer diverse Informationen zur Verfügung stellt: Zum einen die von ihm ausgewählten Instanzen, dann das gemäß den Figuren 1 bis 4 vereinbarte Testszenario (Gateway_1) sowie das Datenformat (Message Pools). Im folgenden soll zunächst auf Figur 6 Bezug genommen werden: Die Benutzeroberfläche 36 weist eine Vielzahl von Icons 40 auf, die, wie von Programmen zur Textverarbeitung oder Graphikbearbeitung bekannt, beispielsweise unter Verwendung einer Maus anklickbar sind. Unter Verwendung dieser Icons läßt sich in einem Feld 42 in graphischer Weise ein Kommunikationsablauf erstellen. Figur 6 zeigt die Möglichkeit des Einbaus von Code in der Programmiersprache Forth (Draft Proposal ANSI Standard 1994) in einem Block TE_cfg 44, unter Verwendung einer Eingabemaske 46. Für die Eingabe von Code in einer anderen Programmiersprache können weitere Eingabemasken vorgesehen werden.

Zurück zu Figur 5: Hier wird als Beispiel für einen Abschnitt eines Kommunikationsablaufs in Feld 48 dargestellt, wie zunächst alternativ die ASPs DL_ESTABLISH_CNF oder DL_ESTABLISH_IND von einer Instanz erwartet werden. Daraufhin wird ein Timer T_Waitlnit der Länge 5s gestartet und das Ablaufen des Timers abgewartet.

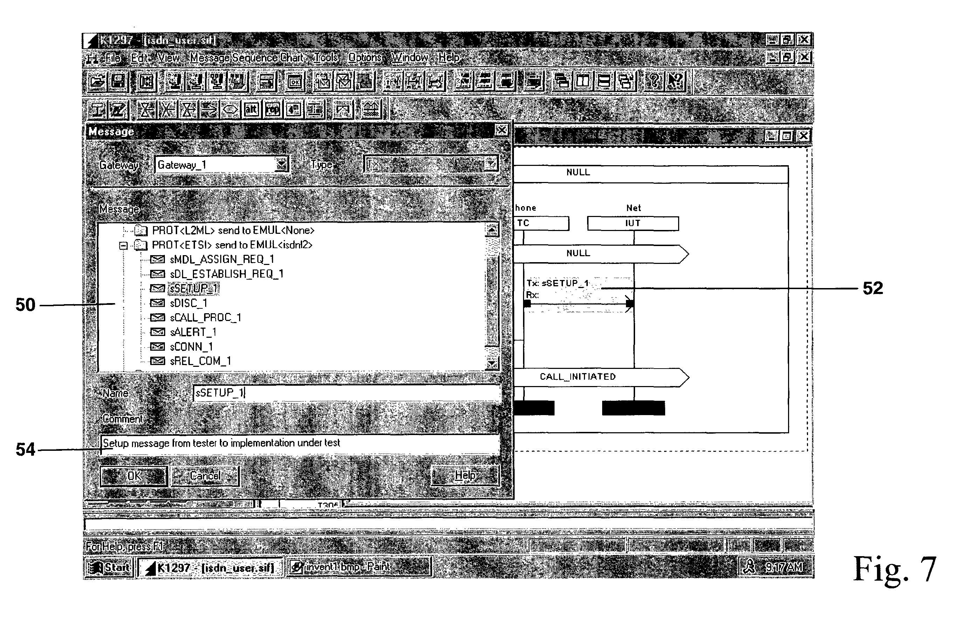

Figur 7 zeigt, wie eine isdn-PDU "SETUP_1" als Sendenachricht in das graphisch erstellte Ablaufdiagramm eingefügt wird. In einer Eingabemaske 50 werden ASPs mit PDUs aus dem zuvor ausgewählten Message Pool angeboten. In einem optisch hervorgehobenen Feld 52 kann die ausgewählte PDU eingetragen werden. In einem Feld 54 wird weitere Information zur ausgewählten ASP beziehungsweise PDU dem Benutzer dargeboten.

Auf die soeben beschriebene Art und Weise läßt sich somit ein Kommunikationsablauf erstellen, wobei bevorzugt allen auswählbaren Parametern Beschreibungsdateien zugeordnet sind, die zum automatischen Erstellen eines zwischen den Instanzen ausführbaren Kommunikationsablaufs durch den Protokolltester automatisch miteinander verwendbar sind.

Bei der Erzeugung eines ausführbaren Codes wirken drei Komponenten zusammen: Zunächst die graphischen Benutzeroberflächen, die die gewählten Parameter, insbesondere auch die Kommunikationsabfolge in einer internen Struktur speichert. Dann ein Compiler, der die gewählten Parameter in temporäre Files übersetzt und schließlich ein Linker, der dies temporären Files liest und in die gewählte Interpreter-Scriptsprache, beispielsweise ANS Forth, umsetzt. Dabei wird der gesamte Kommunikationsablauf wie er vom Benutzer definiert wurde in ein Scriptfile geschrieben.

Im Anhang A1 ist passend zu den beschriebenen Figuren der automatisch vom Protokolltester generierte Code wiedergegeben.

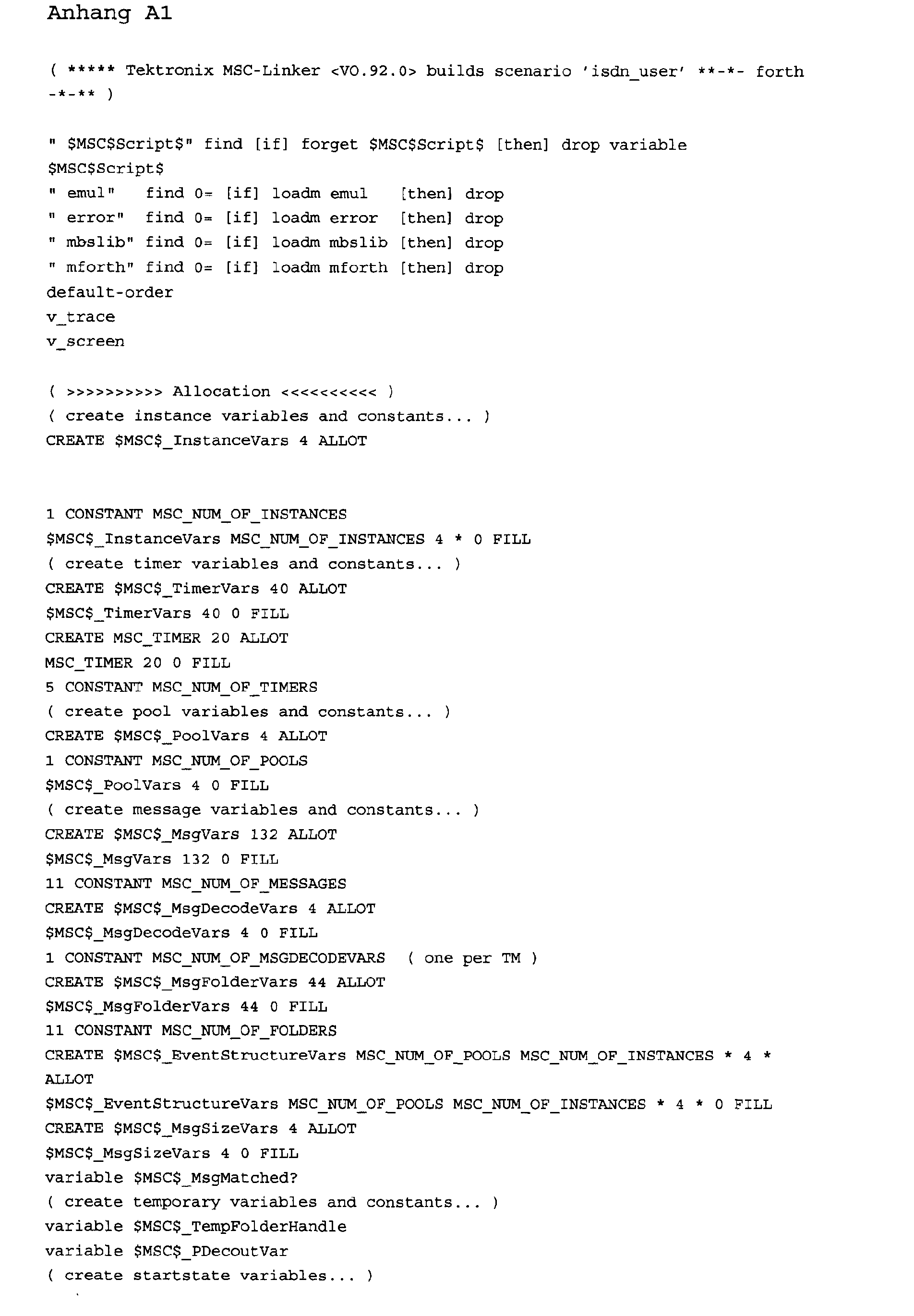

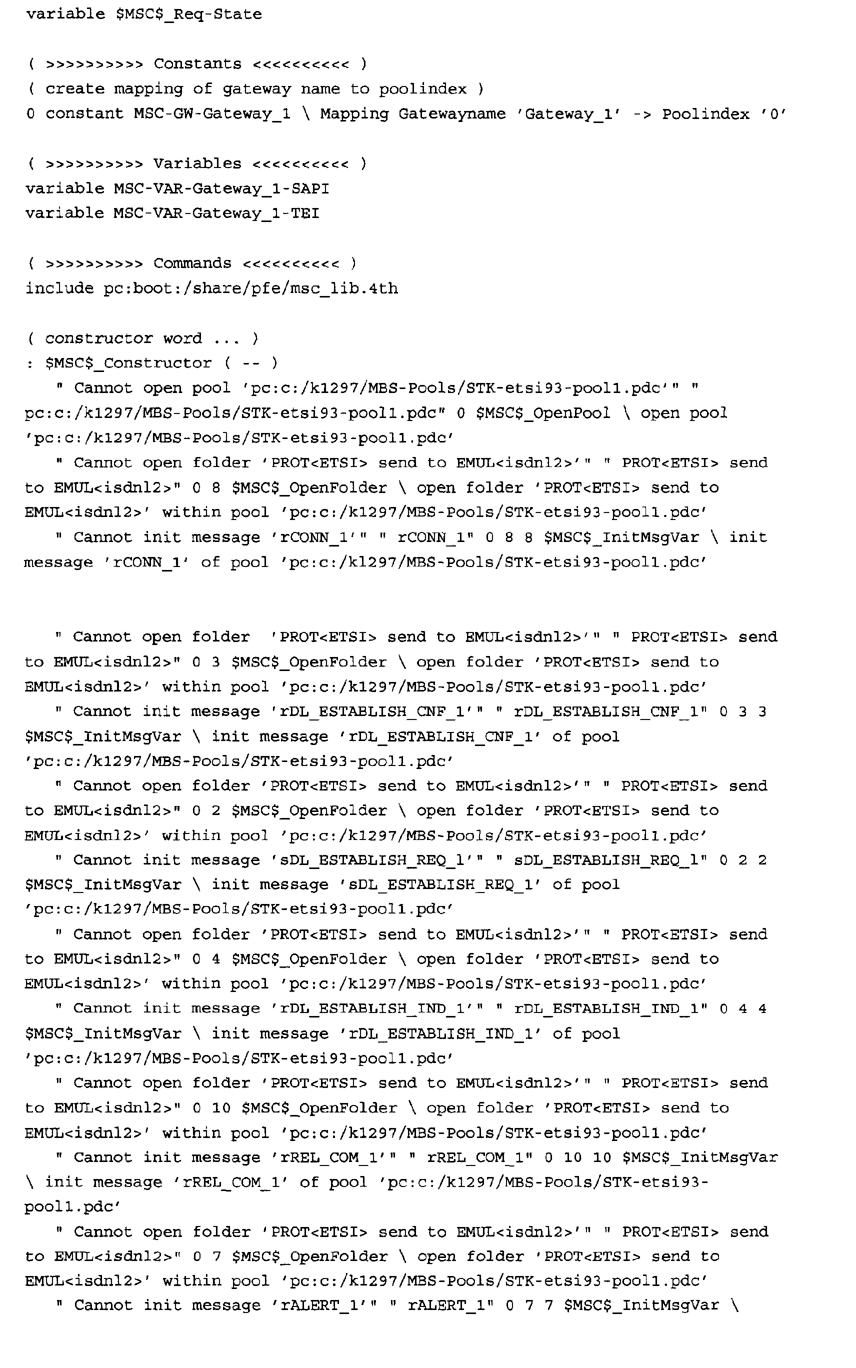

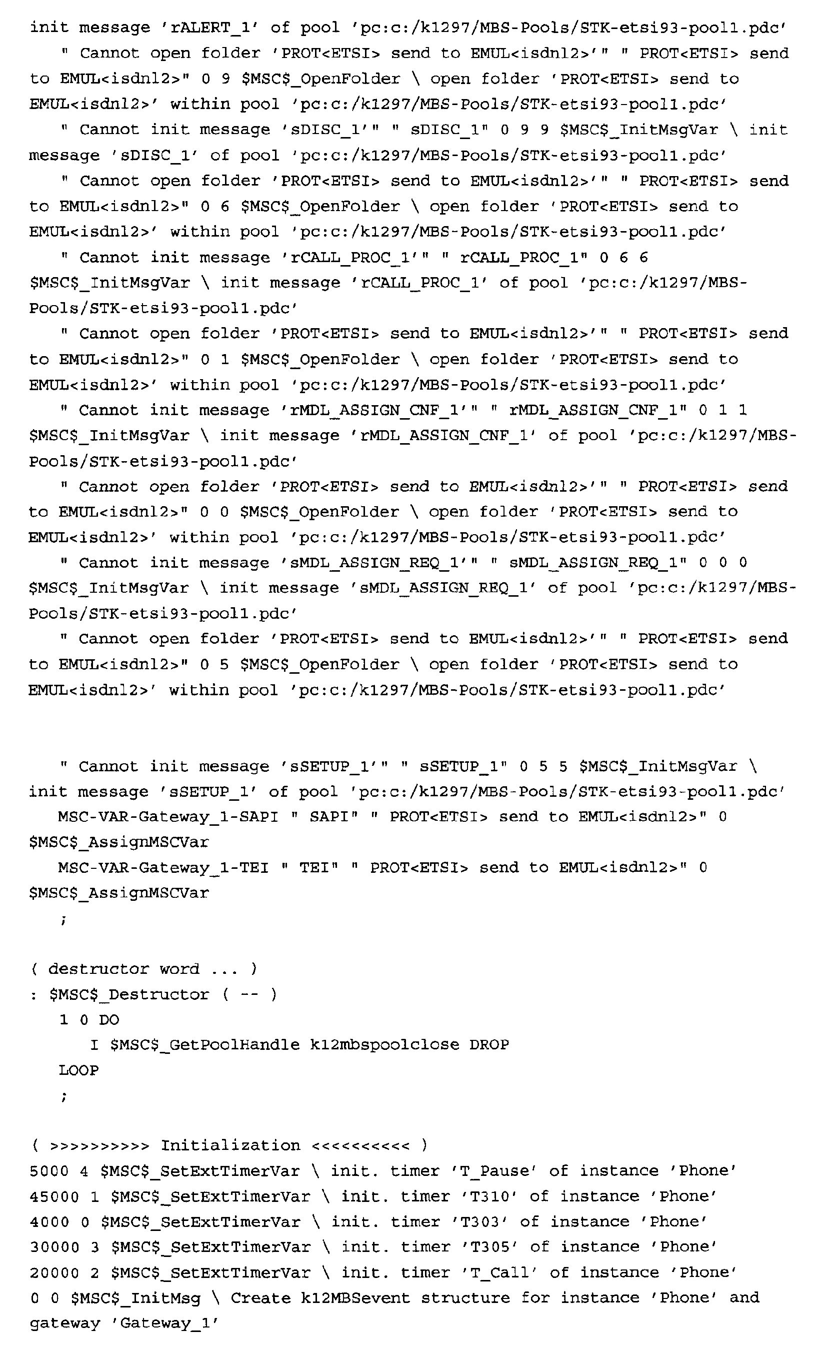

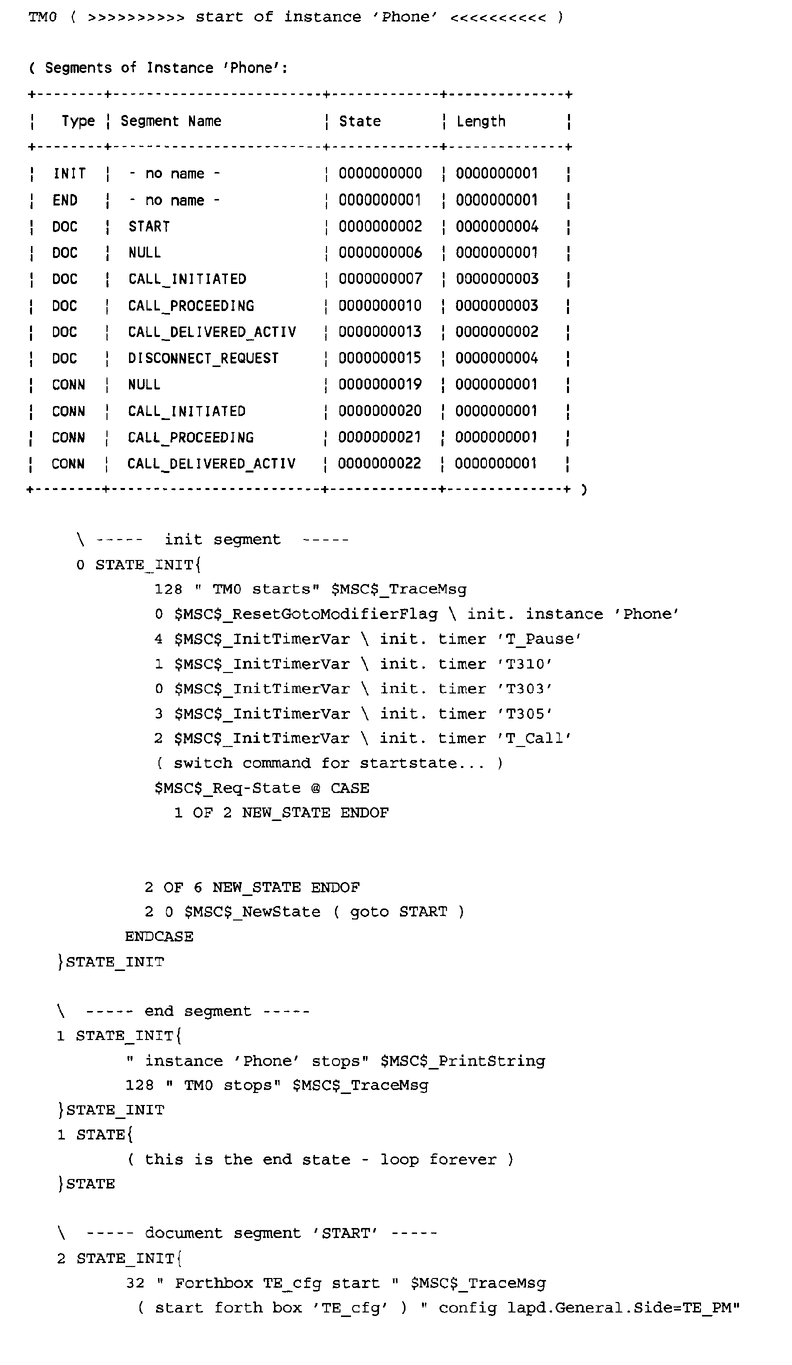

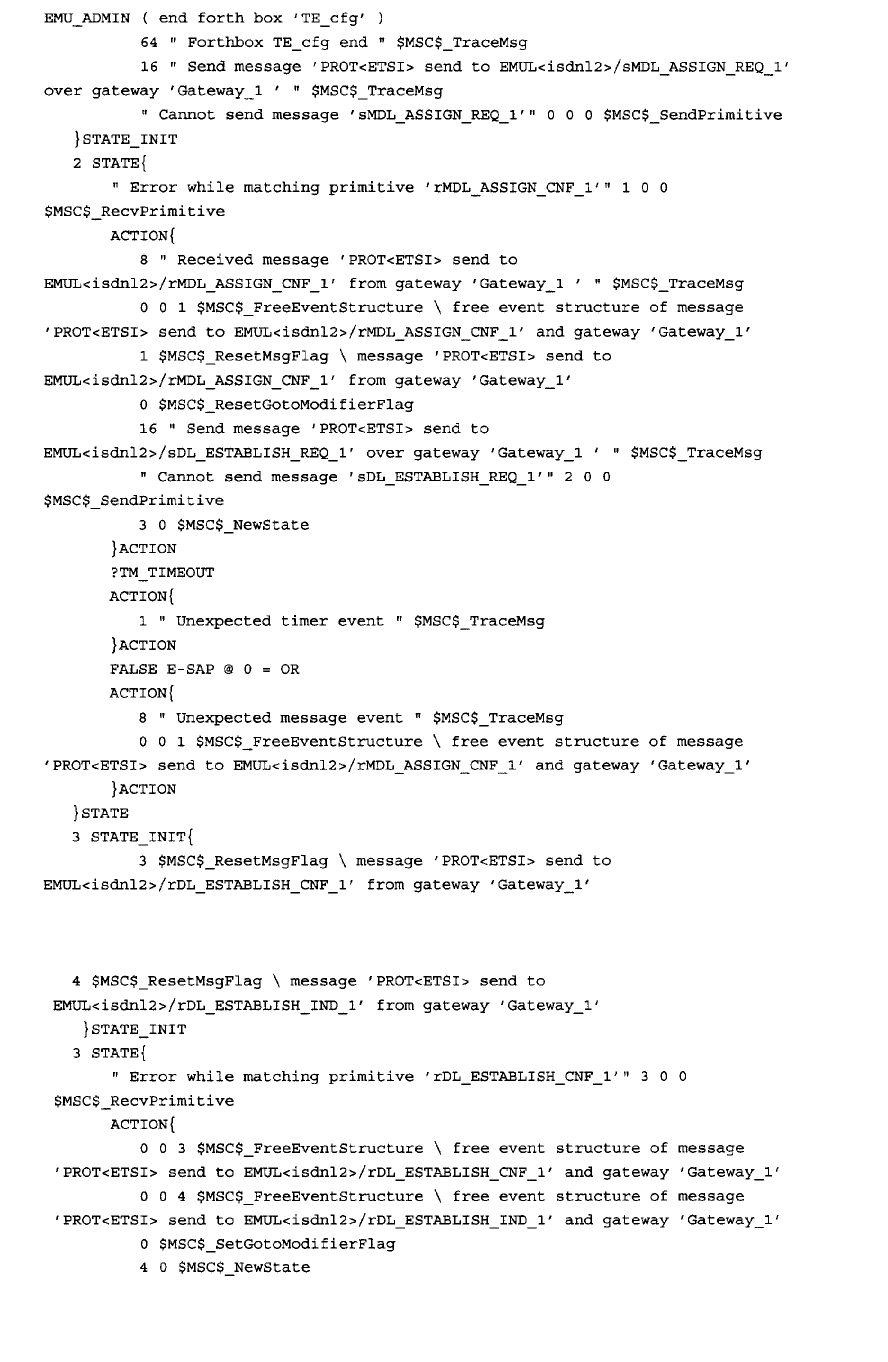

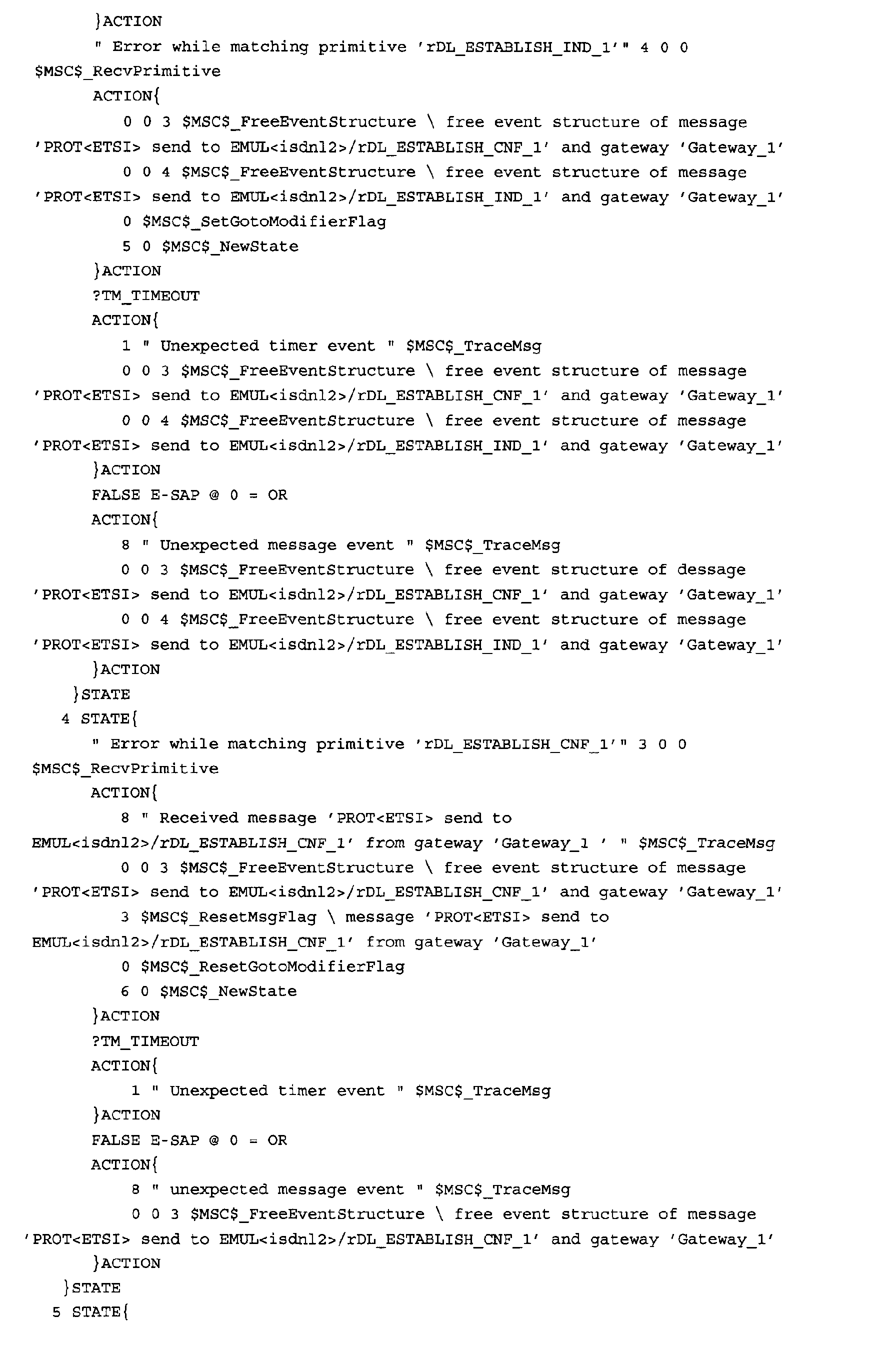

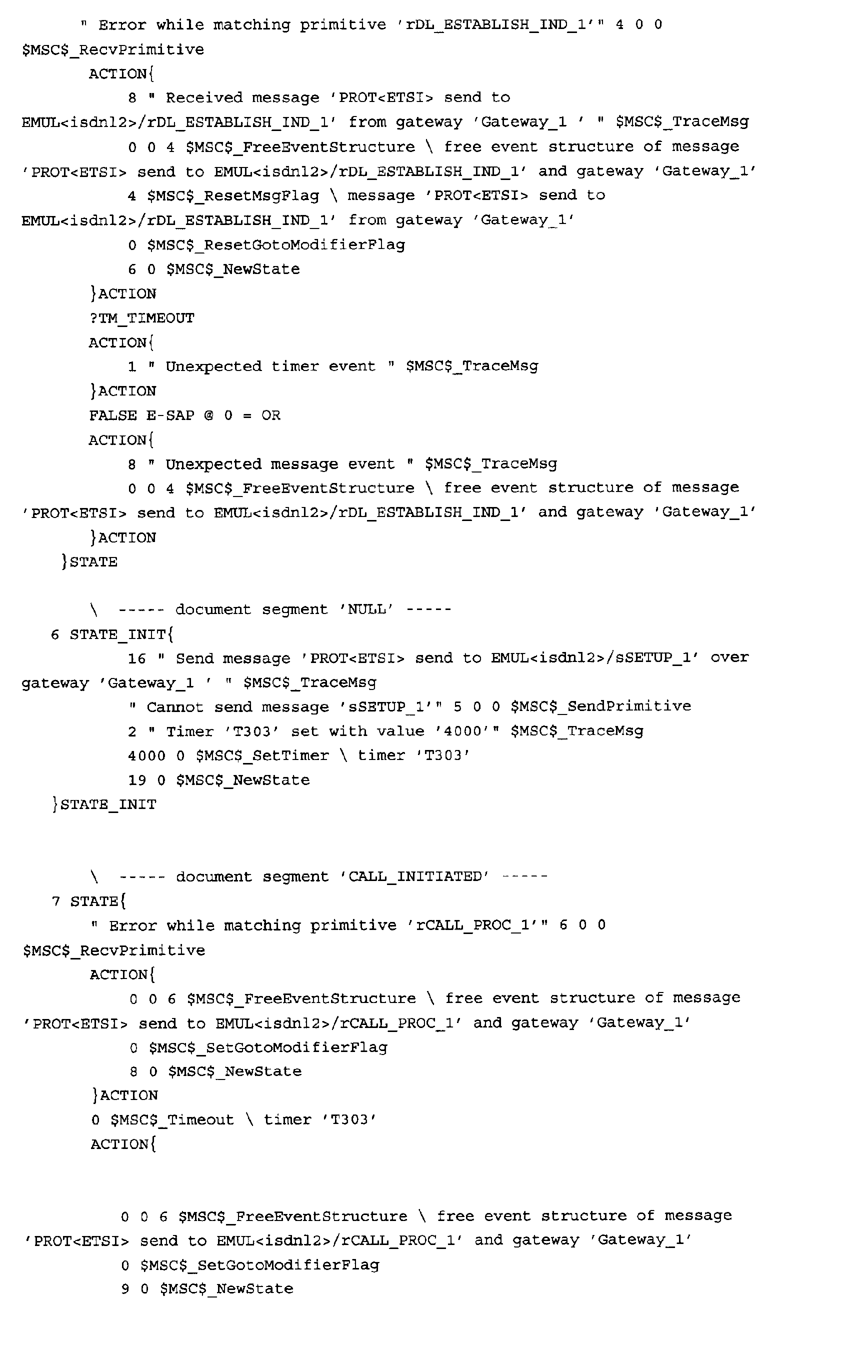

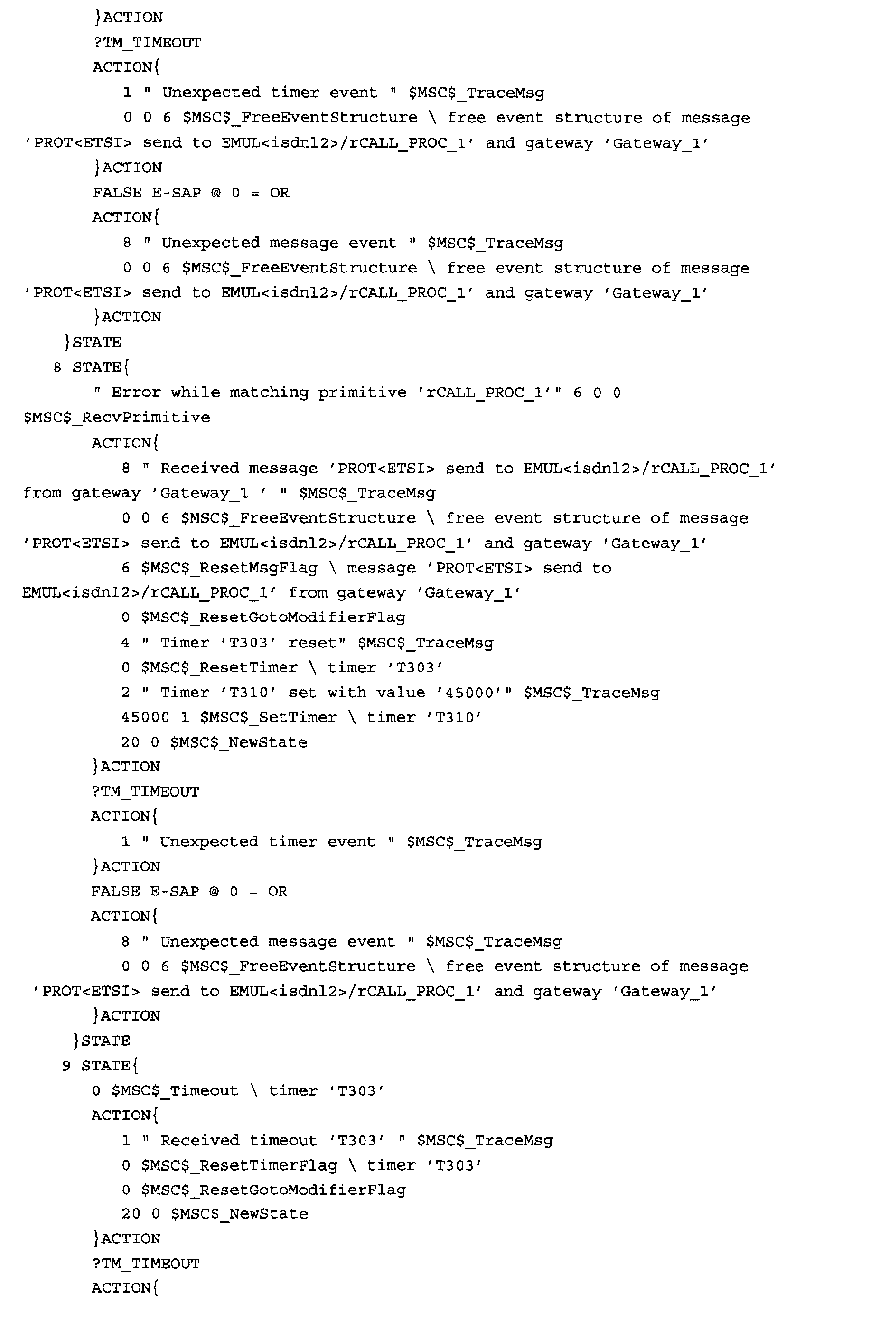

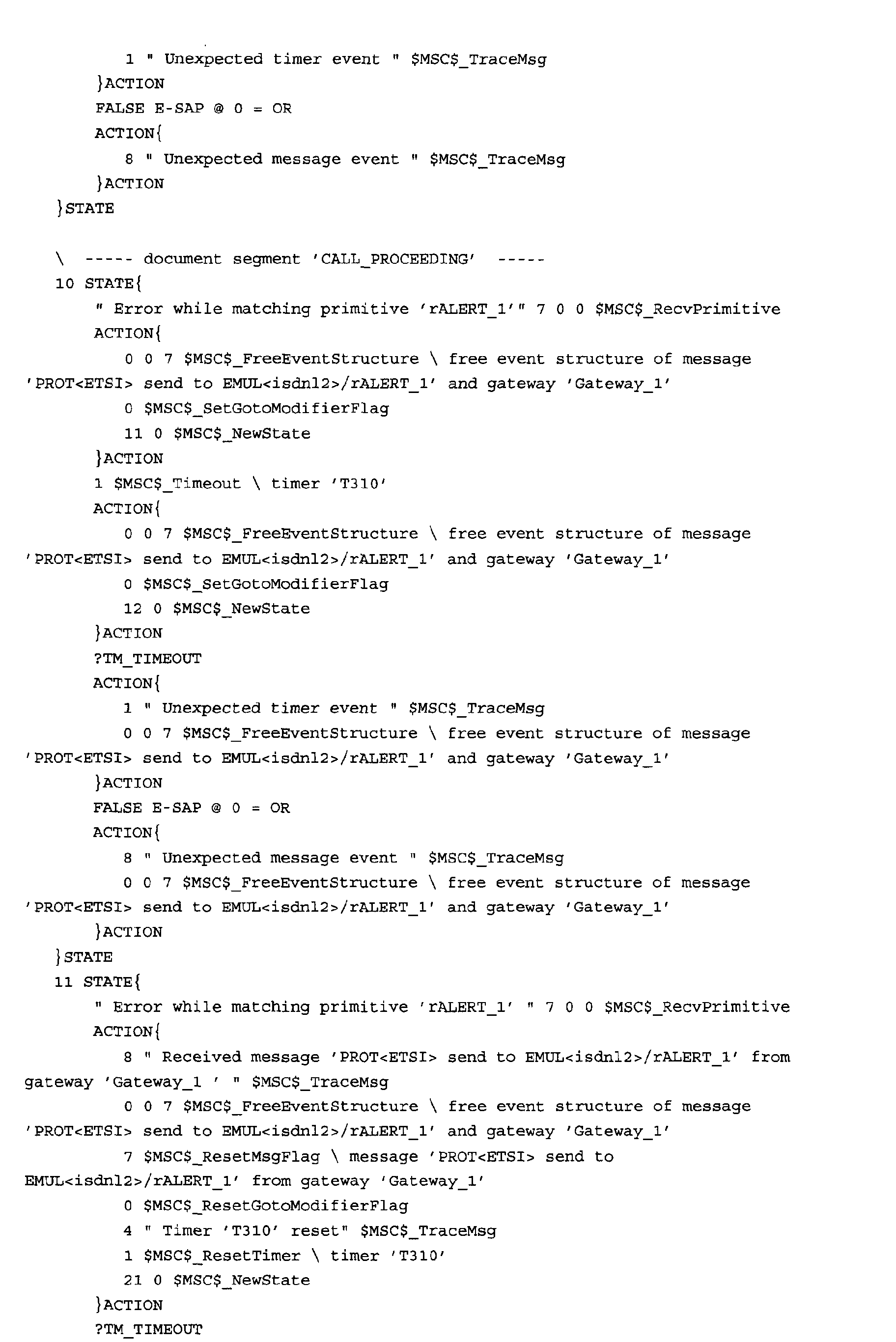

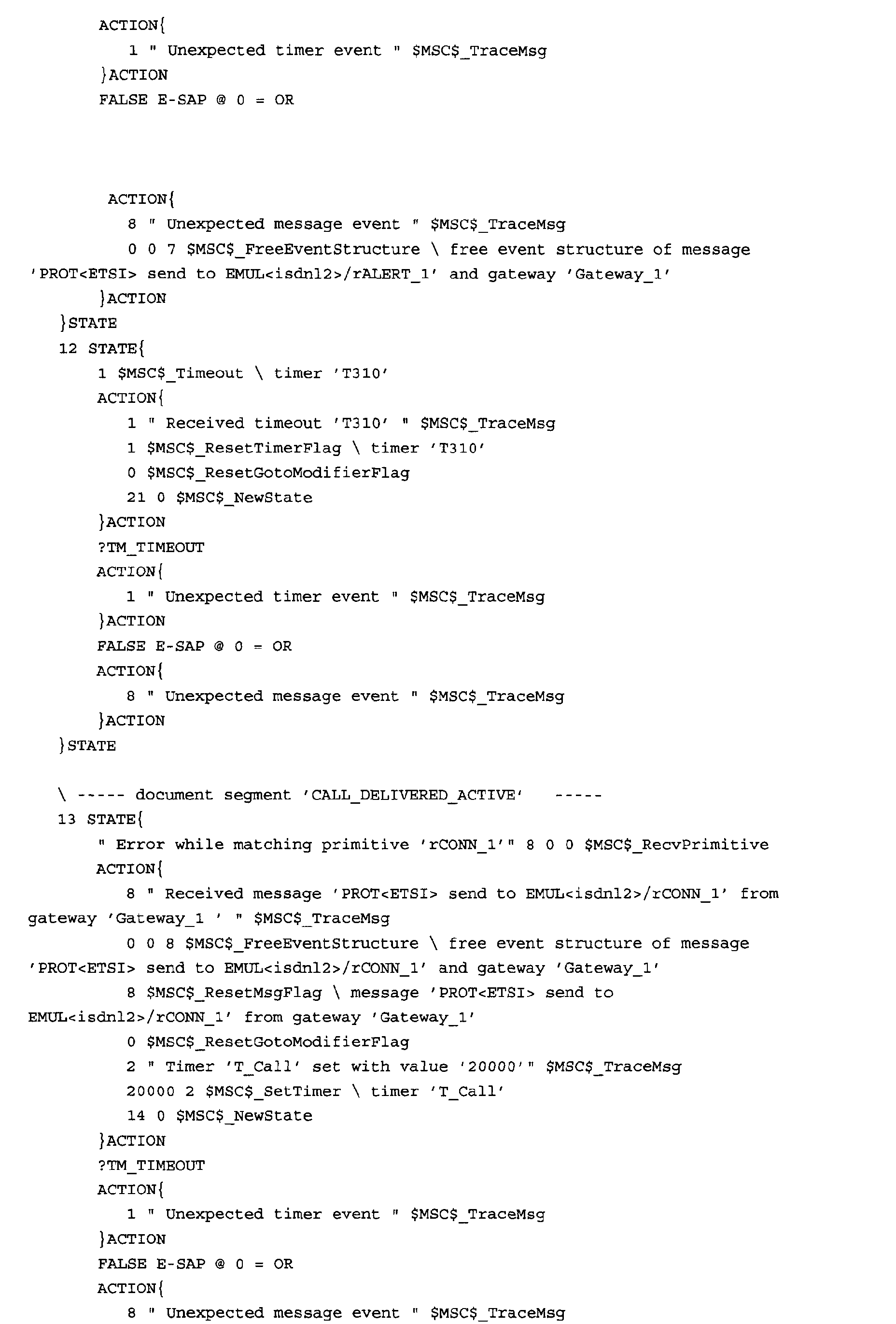

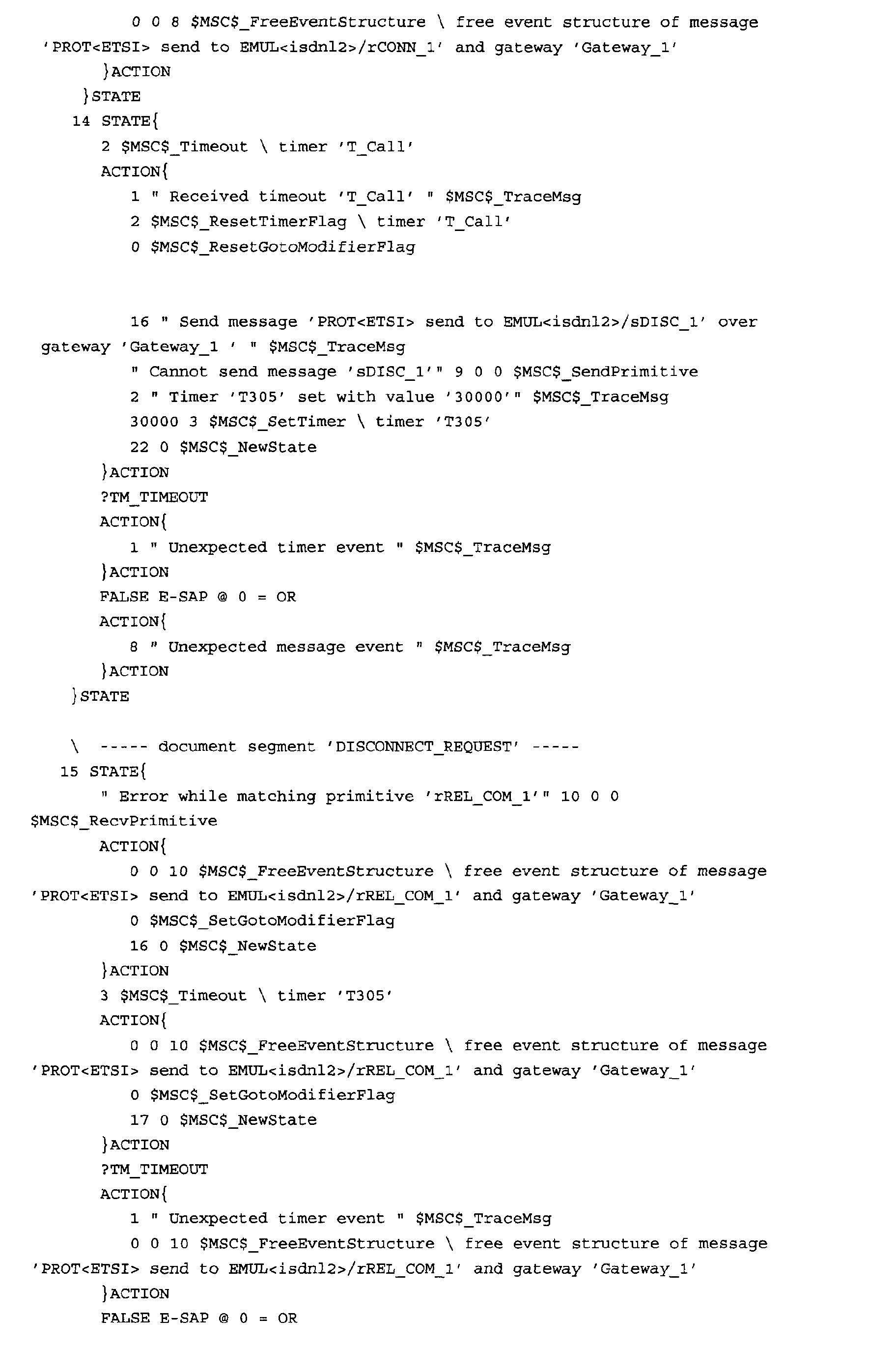

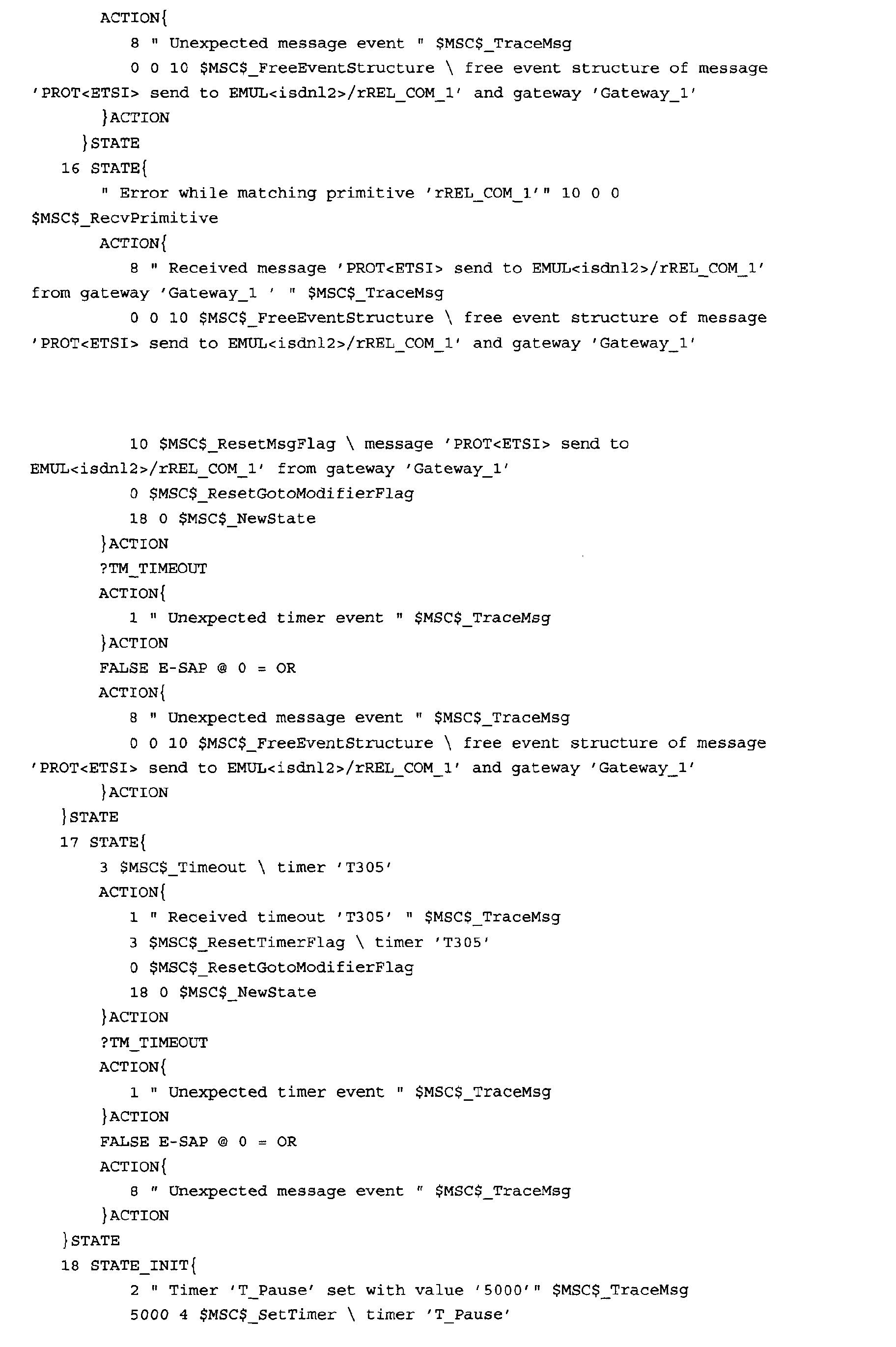

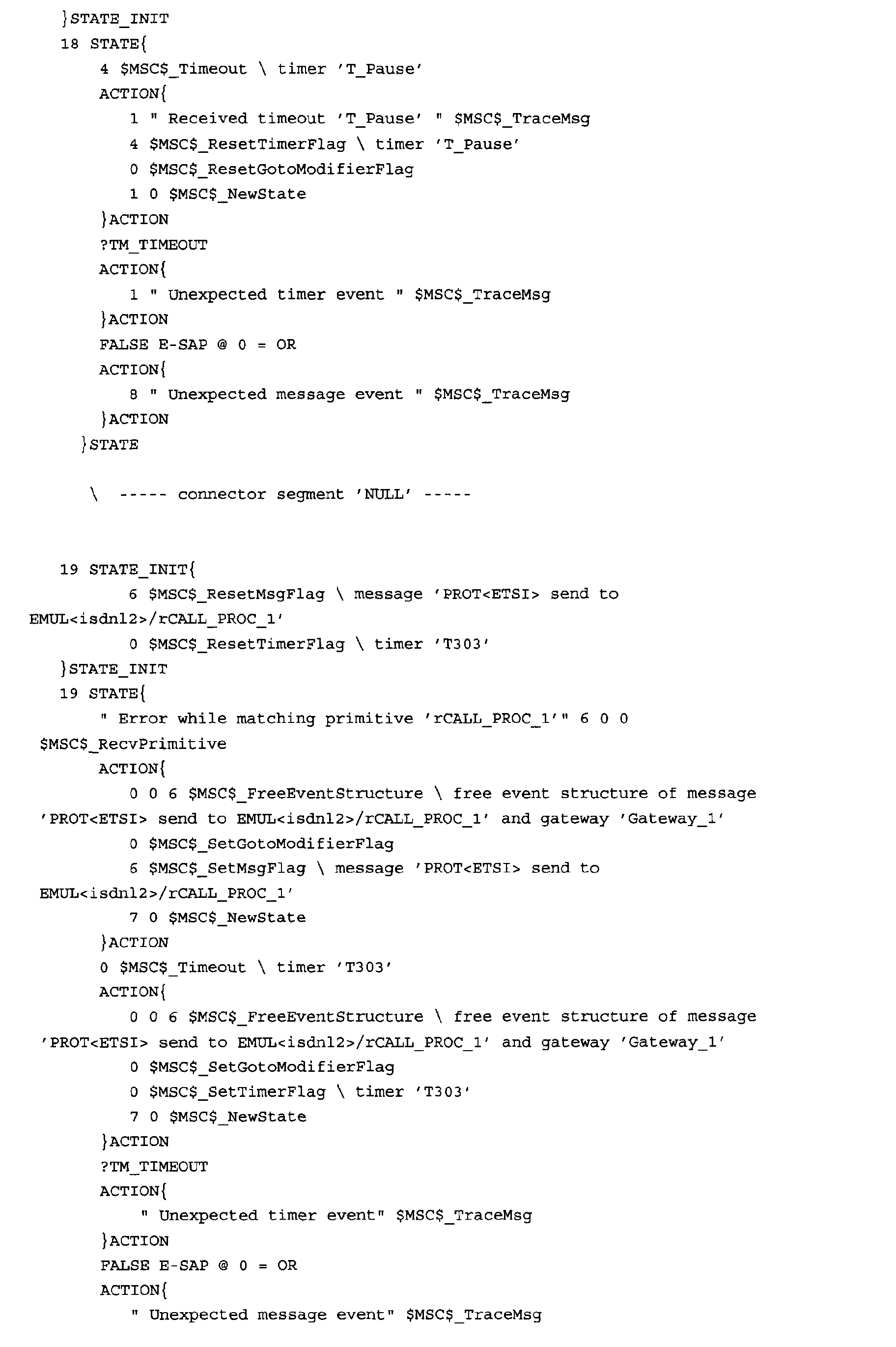

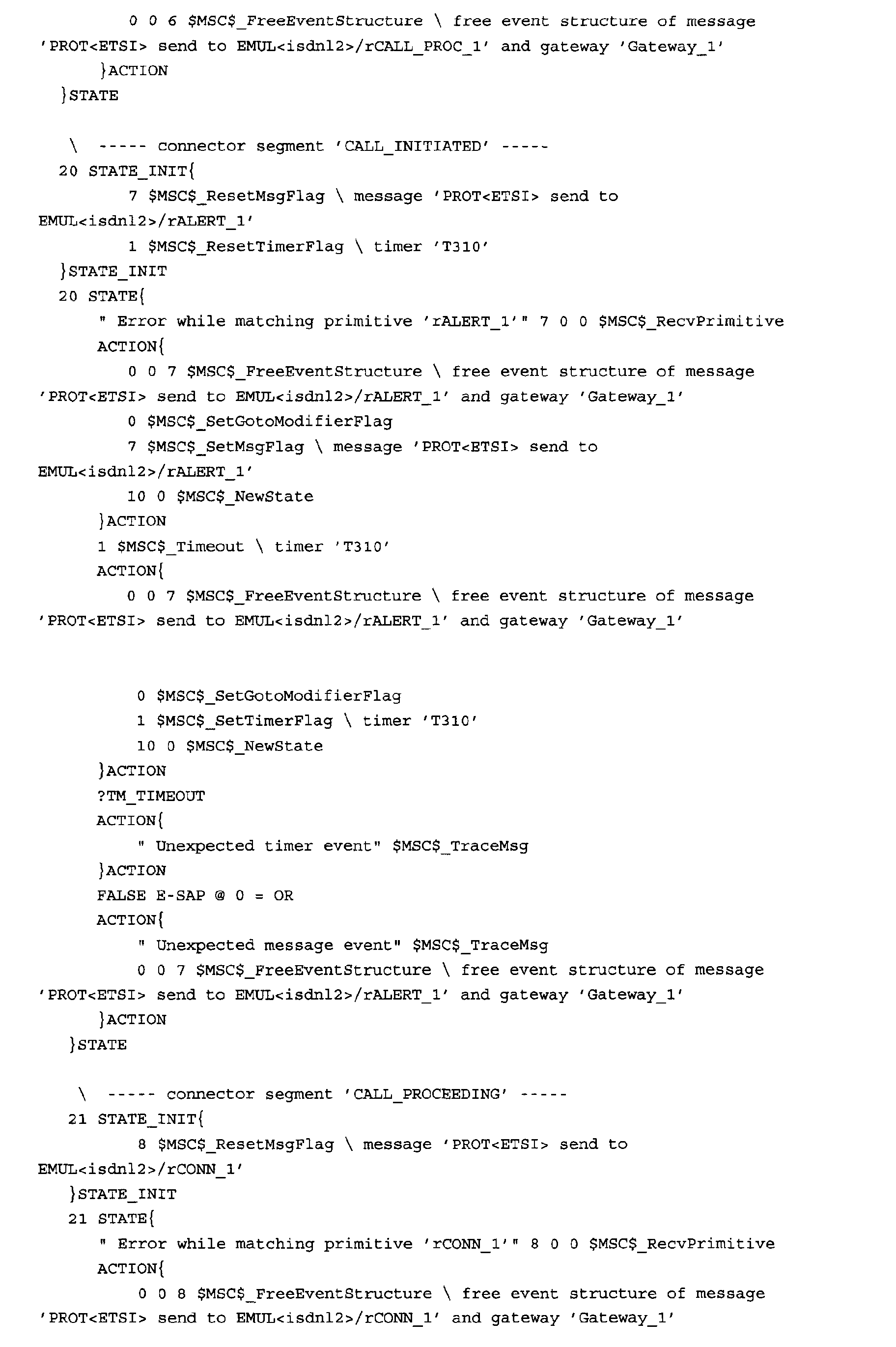

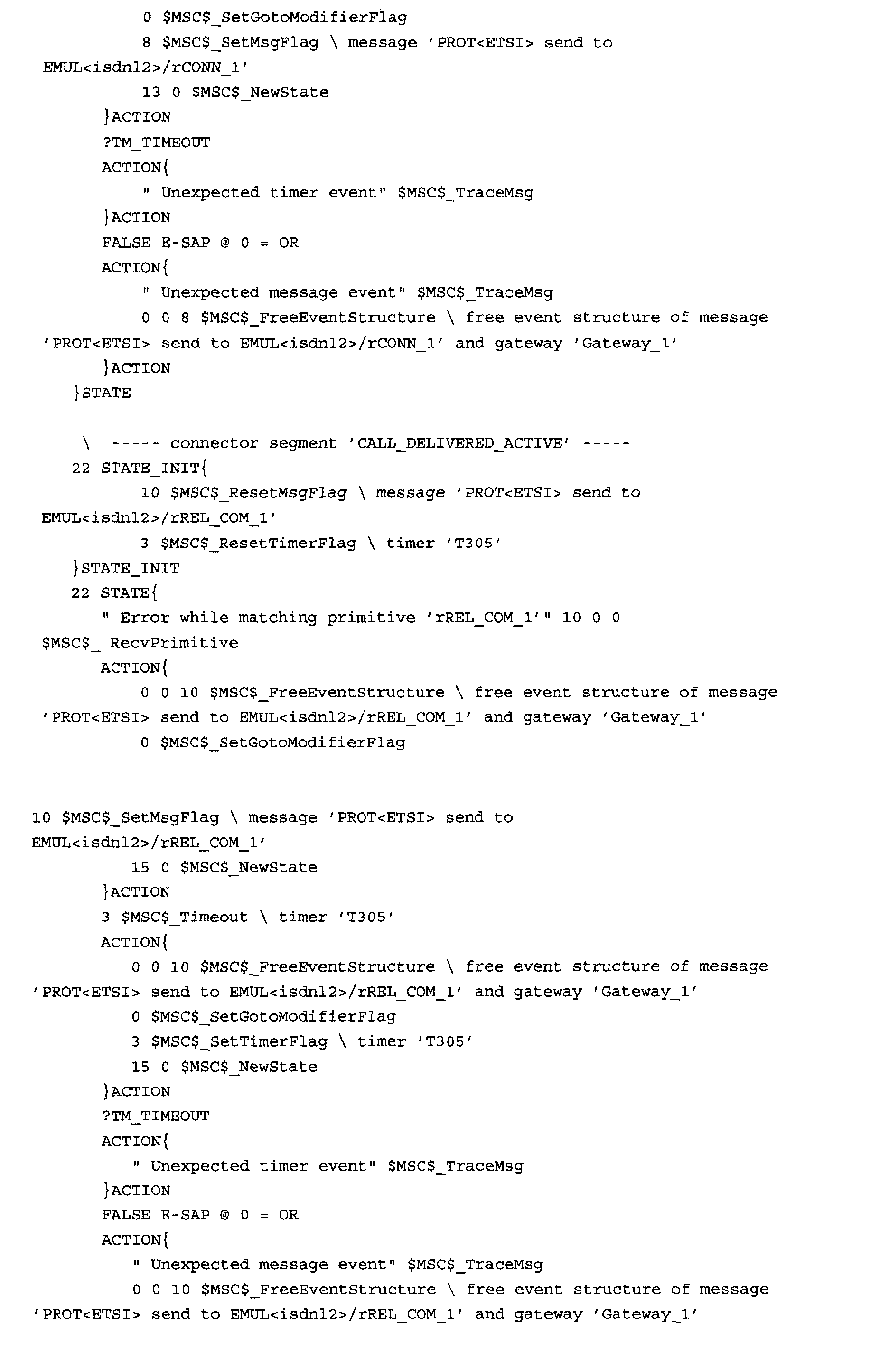

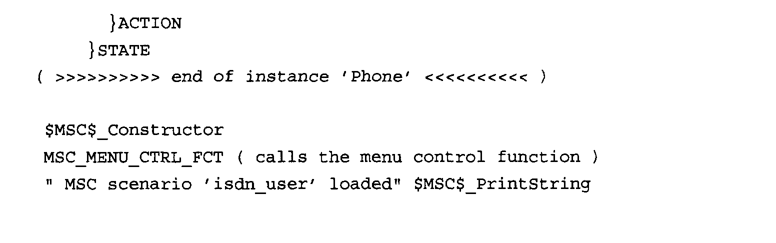

## Patentansprüche

1. Verfahren zum Erstellen eines Ablaufs einer zwischen mindestens zwei Instanzen ablaufenden Kommunikation, wobei eine Instanz ein Protokolltester ist, gekennzeichnet durch folgende, am Protokolltester ausführbare Schritte:
a) Auswählen der an der Kommunikation beteiligten Instanzen;
b) Auswählen einer Protokollschicht, auf deren Grundlage die Kommunikation zwischen den ausgewählten Instanzen ablaufen soll;
c) Auswählen derjenigen abstrakten Kommunikationsschnittstellen der Protokollschicht, die an der Kommunikation beteiligt sind;
d) Auswählen der Kommunikationsdaten;
e) automatisches Erstellen eines zwischen den mindestens zwei Instanzen ausführbaren Kommunikationsablaufs durch den Protokolltester, auf der Grundlage der Auswahlen in den Schritten a) bis d),
wobei die Auswahl von Schritt c) und/oder Schritt d) graphisch erfolgt und den dabei auswählbaren Parametern Beschreibungsdateien zugeordnet sind, die in Schritt e) zur Erstellung eines zwischen den Instanzen ausführbaren Kommunikationsablaufs verwendet werden.

2. Verfahren nach Anspruch 1,
**dadurch gekennzeichnet,**
daß weiterhin in Schritt a) die an der Kommunikation beteiligten Instanzen graphisch ausgewählt werden und/oder in Schritt b) die Protokollschicht graphisch ausgewählt wird und den dabei auswählbaren Parametern Beschreibungsdateien zugeordnet sind, die in Schritt e) zur Erstellung eines zwischen den Instanzen ausführbaren Kommunikationsablaufs verwendet werden.

3. Verfahren nach Anspruch 1 oder 2,
**dadurch gekennzeichnet,**
daß die abstrakten Kommunikationsschnittstellen SAPs (Service Access Points) umfassen.

4. Verfahren nach einem der vorhergehenden Ansprüche,
**dadurch gekennzeichnet,**
daß die Kommunikationsdaten PDUs (Protocol Data Units) und/oder ASPs (Abstract Service Primitives) umfassen.

5. Verfahren nach einem der vorhergehenden Ansprüche,
**dadurch gekennzeichnet,**
daß Schritt d) folgende Teilschritte umfaßt:
d1) graphisches Auswählen eines Datenformats;
d2) graphischer Aufbau einer Kommunikationsabfolge zwischen den beteiligten Instanzen.

6. Verfahren nach Anspruch 5,
**dadurch gekennzeichnet,**
daß in Schritt d2) Source-Code eingebbar ist.

7. Verfahren nach einem der vorhergehenden Ansprüche,
**dadurch gekennzeichnet,**
daß allen auswählbaren Parametern Beschreibungsdateien zugeordnet sind, die in Schritt e) zur Erstellung eines zwischen den Instanzen ausführbaren Kommunikationsablaufs verwendet werden.

8. Protokolltester mit
a) Mitteln zum Auswählen der an einer Kommunikation beteiligten Instanzen (19, 20, 24, 26), wobei eine der Instanzen der Protokolltester ist;
b) Mitteln zum Auswählen einer Protokollschicht (20, 28a), auf deren Grundlage die Kommunikation zwischen den ausgewählten Instanzen ablaufen soll;
c) Mitteln zum Auswählen derjenigen abstrakten Kommunikationsschnittstellen (20, 32a) der Protokollschicht, die an der Kommunikation beteiligt sind;
d) Mitteln zum Auswählen der Kommunikationsdaten (20, 34);
e) Mitteln zum automatischen Erstellen eines zwischen den Instanzen ausführbaren Kommunikationsablaufs durch den Protokolltester, auf der Grundlage der Auswahlen gemäß a) bis d),
wobei die Auswahlmittel gemäß c) und/oder gemäß d) graphische Auswahlmittel sind und den durch sie auswählbaren Parametern Beschreibungsdateien zugeordnet sind, die gemäß e) von den Erstellungsmitteln zur Erstellung eines zwischen den Instanzen ausführbaren Kommunikationsablaufs verwendbar sind.

9. Protokolltester nach Anspruch 8,
**dadurch gekennzeichnet,**
daß die Mittel zum Auswählen der an der Kommunikation beteiligten Instanzen (19, 20, 24, 26) und/oder die Mittel zum Auswählen der Protokollschicht (20, 28a) graphische Auswahlmittel sind und den durch sie auswählbaren Parametern Beschreibungsdateien zugeordnet sind, die gemäß e) von den Erstellungsmitteln zur Erstellung eines zwischen den Instanzen ausführbaren Kommunikationsablaufs verwendbar sind.

10. Protokolltester nach einem der Ansprüche 8 oder 9,
**dadurch gekennzeichnet,**
daß die abstrakten Kommunikationsschnittstellen SAPs (Service Access Points) umfassen.

11. Protokolltester nach einem der Ansprüche 8 bis 10,
**dadurch gekennzeichnet,**
daß die Kommunikationsdaten PDUs (Protocol Data Units) und/oder ASPs (Abstract Service Primitives) umfassen.

12. Protokolltester nach einem der Ansprüche 8 bis 11,
**dadurch gekennzeichnet,**
daß er Mittel zum Eingeben von Source-Code (44, 46) umfaßt.

13. Protokolltester nach einem der Ansprüche 8 bis 12,
**dadurch gekennzeichnet,**
daß allen mit den Auswahlmitteln auswählbaren Parametern Beschreibungsdateien zugeordnet sind, die gemäß e) von den Erstellungsmitteln zur Erstellung eines zwischen den Instanzen ausführbaren Kommunikationsablaufs verwendbar sind.
